# EUROPÄISCHE PATENTANMELDUNG

(11) **EP 1 294 166 A1**
(43) Veröffentlichungstag der Anmeldung: **19.03.2003**
(21) Anmeldenummer: 01122114.0
(22) Anmeldetag: 14.09.2001
(51) Int. Cl.: H04M 7/00, H04Q 3/00, H04L 12/64

(54) **Signalisierungsverfahren für die Übertragung von Nutzdaten über leitungs- und packetvermittelte Datenübertragungsnetze**

(71) Anmelder: SIEMENS AKTIENGESELLSCHAFT, 80333 München (DE)
(72) Erfinder: Hoffmann, KLaus, 81735 München (DE)

(57) **Zusammenfassung**

Es ist Aufgabe der Erfindung, für die Übertragung von Nutzdaten über verschiedene Arten von Datenübertragungsnetzen ein einfaches Signalisierungsverfahren anzugeben.

Die Erfindung geht von der Überlegung aus, dass ursprünglich für die Datenübertragung in einem durchschaltevermittelten Datenübertragungsnetz ein Signalisierungsverfahren für durchschaltevermittelte Datenübertragungsnetze festgelegt worden ist. Mit dem Entstehen von Datenpaketübertragungsnetzen wurden Signalisierungsverfahren für Datenpaketübertragungsnetze festgelegt. Die Signalisierungsverfahren für Datenpaketübertragungsnetze waren zwar an das Signalisierungsverfahrens eines durchschaltevermittelten Datenübertragungsnetzes angelehnt, jedoch entwickelten sich beide Signalisierungsverfahren bisher getrennt voneinander. Bei Datenübertragungen, bei denen die Daten in beiden Netzarten übertragen werden, sind jedoch auch gemeinsame Signalisierungselemente beider Signalisierungsverfahren erforderlich.

Beim erfindungsgemäßen Verfahren wird deshalb eine Signalisierungsnachricht festgelegt und übertragen, die eindeutig signalisiert, dass an der Datenübertragung ein Endgerät eines Datenpaketübertragungsnetzes. Diese Signalisierungsnachricht wird vor der Übertragung der Nutzdaten gesendet. Abhängig vom Inhalt oder abhängig vom Auftreten der Signalisierungsnachricht wird die Übertragung von Daten zwischen dem durchschaltevermittelten Datenübertragungsnetz und dem Datenpaketübertragungsnetz von anderen Datenübertragungen unterschieden, z.B.von Datenübertragungen ausschließlich im durchschaltevermittelten Datenübertragungsnetz bzw. von Datenübertragungen ausschließlich im Datenpaketübertragungsnetz.

## Beschreibung

Die Erfindung betrifft ein Signalisierungsverfahren, bei dem Nutzdaten zwischen einem durchschaltevermittelten Datenübertragungsnetz und einem Datenpaketübertragungsnetz übertragen werden.

Das durchschaltevermittelte Datenübertragungsnetz ist beispielsweise ein Telekommunikations-Netz, in welchem die Nutzdaten in Zeitkanälen gemäß einem Zeitmultiplexverfahren weitergeleitet werden, z.B. in Zeitkanälen eines PCM-Systems (Pulse Code Modulation). Ein solches Netz ist beispielsweise das Telefonnetz der Deutschen Telekom AG. Das Endgerät ist beispielsweise ein ISDN-Telefon (Integrated Services Digital Network), ein analoges Telefon oder ein Bildtelefon.

Das Datenübertragungsnetz ist beispielsweise das Internet oder ein anderes gemäß Internetprotokoll arbeitendes Datenübertragungsnetz. Jedoch werden auch andere Datenpaketübertragungsnetze eingesetzt, z.B. das ATM-Netz (Asynchronous Transfer Mode). In einem ATM-Netz werden die Datenpakete auch als Zellen bezeichnet. Die Datenpakete bzw. Zellen enthalten Lenkdaten, die für das Weiterleiten der in den Datenpaketen enthaltenen Nutzdaten eingesetzt werden. In Datenpaketübertragungsnetzen gibt es nur auf höheren Protokollebenen eine Verbindung. Auf unteren Protokollebenen werden die Datenpakete dagegen verbindungslos übertragen.

Es ist Aufgabe der Erfindung, für die Übertragung von Nutzdaten über verschiedene Arten von Datenübertragungsnetzen ein einfaches Signalisierungsverfahren anzugeben. Außerdem sollen eine zugehörige Signalisierungseinheit und ein zugehöriges Programm angegeben werden.

Die auf das Signalisierungsverfahren bezogene Aufgabe wird durch die im Patentanspruch 1 angegebenen Verfahrensschritte gelöst. Weiterbildungen sind in den Unteransprüchen angegeben.

Die Erfindung geht von der Überlegung aus, dass ursprünglich für die Datenübertragung in einem durchschaltevermittelten Datenübertragungsnetz ein Signalisierungsverfahren für durchschaltevermittelte Datenübertragungsnetze festgelegt worden ist. Mit dem Entstehen von Datenpaketübertragungsnetzen wurden Signalisierungsverfahren für Datenpaketübertragungsnetze festgelegt. Die Signalisierungsverfahren für Datenpaketübertragungsnetze waren zwar an das Signalisierungsverfahrens eines durchschaltevermittelten Datenübertragungsnetzes angelehnt, jedoch entwickelten sich beide Signalisierungsverfahren bisher getrennt voneinander. Bei Datenübertragungen, bei denen die Daten in beiden Netzarten übertragen werden, sind jedoch auch gemeinsame Signalisierungselemente beider Signalisierungsverfahren erforderlich.

Beim erfindungsgemäßen Verfahren wird deshalb eine Signalisierungsnachricht festgelegt und übertragen, die eindeutig signalisiert, dass an der Datenübertragung ein Endgerät eines Datenpaketübertragungsnetzes. Diese Signalisierungsnachricht wird vor der Übertragung der Nutzdaten gesendet. Abhängig vom Inhalt oder abhängig vom Auftreten der Signalisierungsnachricht wird die Übertragung von Daten zwischen dem durchschaltevermittelten Datenübertragungsnetz und dem Datenpaketübertragungsnetz von anderen Datenübertragungen unterschieden, z.B. von Datenübertragungen ausschließlich im durchschaltevermittelten Datenübertragungsnetz bzw. von Datenübertragungen ausschließlich im Datenpaketübertragungsnetz.

Abhängig vom Ergebnis der Unterscheidung werden Maßnahmen getroffen, welche für die entsprechende Übertragungsart erforderlich sind. Die Maßnahmen für verschiedene Übertragungsarten unterscheiden sich ebenfalls voneinander. Zur Durchführung des Verfahrens lässt sich eine Signalisierungsfunktion verwenden, die Teil einer Netzübergangsfunktion ist und die auch Signalisierungsfunktionen für eine Datenübertragung ausschließlich innerhalb eines Datenübertragungsnetzes einer Art hat.

Bei einer Alternativ signalisiert die Signalisierungsnachricht eindeutig, dass eine Einheit beteiligt ist, die Daten wie ein Endgerät eines Datenpaketübertragungsnetzes überträgt oder eine Datenübertragung mit einem Endgerät eines Datenpaketübertragungsnetzes veranlasst. Die Einheit ist beispielsweise eine sogenannte SCP-Einheit (Signalling Control Point), eine sogenannte SSP-Einheit (Service Switching Point) oder eine Steuereinheit, die einen IN-Dienst (Intelligent Network) erbringen, bei dem Daten über verschiedene Arten von Datenübertragungsnetzen übertragen werden. Der Dienst betrifft beispielsweise eine automatisch aufgebaute Verbindung zwischen zwei Teilnehmern verschiedener Datenübertragungsnetze.

Durch den Einsatz des erfindungsgemäßen Verfahrens wird erreicht, dass insbesondere in dem Teil des Signalisierungsnetzes, in dem ein Signalisierungsverfahren für ein durchschaltevermitteltes Datenübertragungsnetz eingesetzt wird, auf einfache und eindeutige Art signalisiert werden kann, dass ein Endgerät eines Datenpaketübertragungsnetzes oder die oben erwähnte Einheit an der Übertragung beteiligt ist. Bisher konnte man die Beteiligung eines solchen Endgerätes bzw. einer solchen Einheit nicht sicher feststellen.

Bei einer Weiterbildung des erfindungsgemäßen Verfahrens erfüllt die Signalisierungsnachricht einen Standard für die Signalisierung in einem durchschaltevermittelten Datenübertragungsnetz. Damit lässt sich die Signalisierungsnachricht auch von Signalisierungseinheiten senden bzw. von Signalisierungseinheiten empfangen, die zum Signalisieren für die durchschaltevermittelte Datenübertragung dienen.

Bei einer anderen Weiterbildung des erfindungsgemäßen Verfahrens enthält die Signalisierungsnachricht ein Informationselement, dessen Wert zur Signalisierung dient. Durch diese Maßnahme wird im Gegensatz zu einem Verfahren, bei dem die Signalisierungsnachricht bereits durch ihr Auftreten die eindeutige Signalisierung herbeiführt, dass die Implementierung des Verfahrens erleichtert wird.

Bei einer nächsten Weiterbildung des erfindungsgemäßen Verfahrens ist die Signalisierungsnachricht eine standardgemäße Signalisierungsnachricht, wie sie auch bei der Signalisierung für eine Datenübertragung eingesetzt wird, bei der die Daten ausschließlich in einem durchschaltevermittelten Datenübertragungsnetz übertragen werden. Das Informationselement wird bei einer Ausgestaltung mittels eines standardgemäßen Transportmechanismus übermittelt, wie er auch bei der Signalisierung für eine Datenübertragung eingesetzt wird, bei der die Daten ausschließlich in einem durchschaltevermittelten Datenübertragungsnetz übertragen werden. Durch diese Maßnahme wird erreicht, dass der Teil des Signalisierungsnetzes, der gemäß einem Signalisierungsverfahren arbeitet, das ursprünglich nur für eine durchschaltevermittelte Datenübertragung festgelegt worden ist, kaum geändert werden muss, um nun sowohl Signalisierungen für Datenübertragungen durchzuführen, bei denen Daten nur durchschaltevermittelt übertragen werden, als auch Signalisierungen, bei denen Daten zwischen einem durchschaltevermittelten Datenübertragungsnetz und einem Datenpaketübertragungsnetz bzw. in umgekehrter Richtung zu übertragen werden.

Bei einer Ausgestaltung ist der erwähnte Standard der ISUP-Standard (ISDN User Part), der insbesondere durch die Standards Q.761 bis Q.765 der ITU-T (International Telecommunication Union - Telecommunication Standardization Sector) gebildet wird. Der ISUP-Standard lässt nämlich Raum für proprietäre Erweiterungen, so dass Signalisierungen für eine Datenübertragung in Datenübertragungsnetzen verschiedener Arten ausgeführt werden können. Dafür werden beispielsweise ebenfalls mit Hilfe des standardisierten Transportmechanismus Internetadressen und Portnummern übermittelt.

Bei einer alternativen Weiterbildung des erfindungsgemäßen Verfahrens ist die Signalisierungsnachricht eine standardgemäße Signalisierungsnachricht, wie sie bei der Signalisierung für eine Datenübertragung eingesetzt wird, bei der die Daten von einem durchschaltevermittelten Datenübertragungsnetz über ein Datenpaketübertragungsnetz wieder zu einem durchschaltevermittelten Datenübertragungsnetz übertragen werden. Das Informationselement wird bei einer Ausgestaltung mit Hilfe eines standardgemäßen Transportmechanismus übermittelt, wie er auch bei der Signalisierung für eine Datenübertragung eingesetzt wird, bei der die Daten von einem durchschaltevermittelten Datenübertragungsnetz über ein Datenpaketübertragungsnetz wieder zu einem durchschaltevermittelten Datenübertragungsnetz übertragen werden. Durch diese Maßnahme wird erreicht, dass Einheiten, die den genannten Standard erfüllen, kaum verändert werden müssen, um auch Signalisierungen für Datenübertragungen durchzuführen, bei denen nicht zwingend zwei Endgeräte eines durchschaltevermittelten Datenübertragungsnetzes einbezogen werden müssen.

Bei einer Ausgestaltung ist der genannte Standard der BICC-Standard (Bearer Independent Call Control), insbesondere die Standards Q.1901 bzw. Q.1902.x der ITU-T, wobei x eine natürliche Zahl größer 1 ist. Da bei den Festlegungen gemäß BICC-Standard bisher nur davon ausgegangen wurde, dass zwei Endgeräte eines durchschaltevermittelten Datenübertragungsnetzes an der Datenübertragung beteiligt sind, ist bisher keine Signalisierungsnachricht vorgesehen, welche die Beteiligung eines Endgerätes signalisiert, das in einem Datenpaketübertragungsnetz liegt. Durch die Weiterbildung der Erfindung wird also eine Lücke im BICC-Standard geschlossen, die bspw. den Fall betrifft, dass das eine Endgerät in einem durchschaltevermittelten Datenübertragungsnetz und dass das andere Endgerät in einem Datenpaketübertragungsnetz liegt.

Bei einer nächsten Weiterbildung des erfindungsgemäßen Verfahrens ist das Informationselement gemäß Standard Q.765.5 strukturiert. Der Standard Q.765.5 der ITU-T betrifft gerade den Transportmechanismus für ISUP-Anwendungen oder für BICC-Anwendungen. Insbesondere enthält das Informationselement gemäß diesem Standard in der folgenden Reihenfolge:
- ein Kennzeichen zur Bezeichnung des Informationselementes,
- eine Angabe zur Länge des Informationselementes,
- eine Kompatibilitätsinformation,
- und eine Angabe für den Wert des Informationselementes.

Durch die konsequente Einhaltung dieser Reihenfolge wird gewährleistet, dass auch Einheiten verschiedener Hersteller problemlos zusammenarbeiten können.

Bei einer nächsten Weiterbildung des erfindungsgemäßen Verfahrens wird das Informationselement mit Hilfe einer IAM-Nachricht (Initial Address Message) gemäß ISUP-Standard oder gemäß BICC-Standard übermittelt. Das bedeutet, dass das Informationselement am Anfang der Signalisierung übertragen wird, die vom rufenden A-Teilnehmer zum gerufenen B-Teilnehmer gerichtet ist. Signalisierungseinheiten auf der Seite des B-Teilnehmers werden so frühzeitig davon unterrichtet, dass ein Endgerät eines Datenpaketübertragungsnetzes bzw. die oben erwähnte Einheit an der Datenübertragung beteiligt ist. Diese Information ist insbesondere für Signalisierungseinheiten von Bedeutung, die gemäß einem Signalisierungsverfahren signalisieren, das ursprünglich für eine Datenübertragung ausschließlich in einem durchschaltevermittelten Datenübertragungsnetz festgelegt worden ist. Insbesondere sind dabei die Signalisierungseinheiten betroffen, welche die Netzübergangsfunktion erbringen.

Bei einer anderen Weiterbildung wird das Informationselement mit Hilfe einer APM-Nachricht (Application Transport Message) gemäß ISUP-Standard oder gemäß BICC-Standard übermittelt. Jedoch lässt sich auch eine andere Nachricht einsetzen, die den ISUP-Standard oder den BICC-Standard erfüllt. Bei einer Ausgestaltung wird das Informationselement vor der Übertragung der ANM-Nachricht (Answer Message) gemäß ISUP-Standard oder gemäß BICC-Standard übermittelt. Sowohl die APM-Nachricht als auch eine ACM-Nachricht (Address Complete Message) bzw. eine andere vom gerufenen B-Teilnehmer zum rufenden A-Teilnehmer gerichtete Signalisierungsnachricht ermöglichen es,. Signalisierungseinheiten auf der Seite des A-Teilnehmers von der Beteiligung eines Endgerätes eines Datenpaketübertragungsnetzes bzw. der Beteiligung der oben erwähnten Einheit zu unterrichten. Die ANM-Nachricht ist deshalb eine besonders wichtige Nachricht, weil mit ihrem Eintreffen die Vergebührung beginnt und damit die Übertragung von Nutzdaten möglich sein sollte.

Bei einer nächsten Weiterbildung des erfindungsgemäßen Verfahrens wird abhängig von der Signalisierungsnachricht oder sowohl abhängig von der Signalisierungsnachricht als auch abhängig vom Inhalt einer weiteren Signalisierungsnachricht ein Rufton erzeugt. Zusätzliche Maßnahmen zum Anlegen eines Ruftones sind nämlich in dem Fall erforderlich, in welchem eine Netzübergansfunktion zur Datenübertragung eingesetzt wird. Genau dieser Fall lässt sich aber mit Hilfe des erfindungsgemäßen Verfahrens sicher Erfassen. Bei einer Datenübertragung ausschließlich im durchschaltevermittelten Netz wird der Rufton beispielsweise erst von einer Endvermittlungsstelle erzeugt.

Bei einer nächsten Weiterbildung wird abhängig von der Signalisierungsnachricht auf das Eintreffen von Daten gewartet, die für den Verbindungsaufbau auf einer höheren Protokollebene des Datenpaketübertragungsnetzeserforderlich sind. Durch diese Maßnahme wird erreicht, dass eine definierte Reaktion auf das Fehlen von Daten festgelegt werden kann. Ein Fehlerfall wird ausgelöst, wenn sowohl die Signalisierungsnachricht als auch die Daten für den Verbindungsaufbau auf der höheren Protokollebene fehlen.

Jedoch wird die erfindungsgemäße Signalisierungsnachricht auch für andere Anwendungen eingesetzt, z.B. für Vergebührungszwecke.

Die Erfindung betrifft außerdem eine Signalisierungseinheit, die nach dem erfindungsgemäßen Verfahren bzw. nach einer Weiterbildung arbeitet. Weiterhin betrifft die Erfindung ein Programm, bei dessen Ausführung durch einen Prozessor das erfindungsgemäße Verfahren oder eine Weiterbildung ausgeführt wird. Damit gelten für die Signalisierungseinheit und für das Programm die oben genannten technischen Wirkungen ebenfalls.

Im Folgenden werden Ausführungsbeispiele der Erfindung an Hand der beiliegenden Zeichnungen erläutert. Darin zeigen:
- Figur 1: eine Netzübergangsfunktion, die durch zwei räumlich voneinander getrennte Vermittlungsstellen und eine abgesetzte Netzübergangseinheit erbracht wird,
- Figur 2: den Aufbau eines Informationselementes zur Übertragung einer Internetadresse,
- Figur 3: den Aufbau eines Informationselementes zur Übertragung einer RTP-Portnummer,
- Figur 4: den Aufbau eines Codeelementes zur Bezeichnung der Rufinstanz,
- Figur 5: den Aufbau eines Informationselementes zur Signalisierung der Beteiligung eines H.323-Terminals, und
- Figur 6: Verfahrensschritte zur Auswertung des Informationselementes gemäß Figur 5.

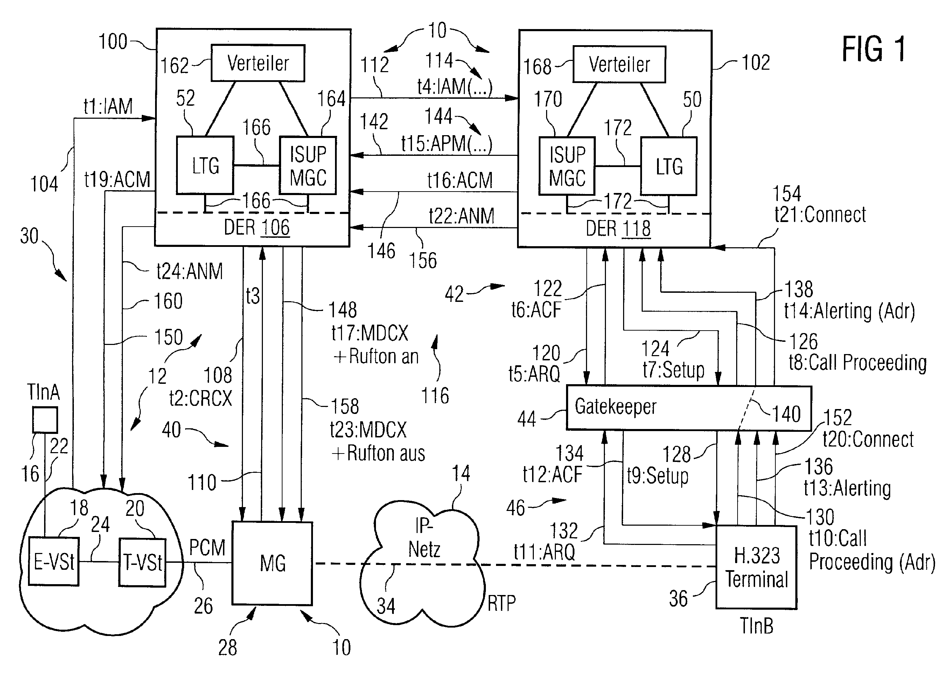

Figur 1 zeigt eine Netzübergangsfunktion 10 zwischen einem Telefonnetz 12 und einem Datenpaketübertragungsnetz 14. Das Telefonnetz 12 ist beispielsweise das Telefonnetz der deutschen Telekom AG. In Figur 1 sind ein Endgerät 16 eines rufenden Teilnehmers TlnA, eine Ursprungsvermittlungsstelle 18 und eine Transitvermittlungsstelle 20 des Telefonnetzes 12 dargestellt. Zwischen dem Endgerät 16 und der Ursprungsvermittlungsstelle 18 liegt eine Teilnehmeranschlussleitung 22.

Die Ursprungsvermittlungsstelle 18 ist mit der Transit-Vermittlungsstelle 20 über eine PCM-30-Übertragungsstrecke 24 verbunden. Die Gesprächsdaten werden in einem Zeitkanal übertragen, und die Signalisierung wird gemäß ISUP-Protokoll ausgeführt. Die Ursprungsvermittlungsstelle 18 und die Transit-Vermittlungsstelle 20 sind beispielsweise herkömmliche Vermittlungsstellen vom Typ EWSD der Firma Siemens AG oder vom Typ S12 der Firma Alcatel AG.

Von der Transit-Vermittlungsstelle 20 führt eine PCM-30-Übertragunsstrecke 26 zum Übertragen der Nutzdaten zu einer Netzübergangseinheit 28, die einen Teil der Netzübergangsfunktion 10 erbringt. Eine Signalisierungsverbindung 30 liegt zwischen der Transit-Vermittlungsstelle 20 und einer Vermittlungsstelle 100, die ebenfalls einen Teil der Netzübergangsfunktion 10 erbringt. Auf der Signalisierungsverbindung 30 wird gemäß ISUP-Protokoll signalisiert.

Die Netzübergangseinheit 28 entnimmt Sprachdaten, die in einem PCM-Kanal der Übertragungsstrecke 26 empfangen werden, und verpackt diese in Datenpakete, die im Datenpaketübertragungs-Netz 14 weitergeleitet werden, z.B. über einen Übertragungsweg 34, der von der Netzübergangseinheit beispielsweise durch das Internet zu einem Endgerät 36 eines Teilnehmers TlnB führt. Andererseits werden aus dem Datenpaketübertragungs-Netz 14 empfangene Datenpakete in der Netzübergangseinheit 28 entpackt. Die in den Datenpaketen enthaltenen Nutzdaten werden in einem Zeitkanal auf der PCM-30-Übertragungsstrecke 26 weitergeleitet.

Die Vermittlungsstelle 100 steuert die Netzübergangseinheit 28 mit Hilfe des Protokolls MGCP (Media Gateway Control Protocol), siehe RFC 2705 der IETF (Internet Engineering Task Force). Die Steuernachrichten werden über einen Übertragungsweg 40 übertragen, der beispielsweise durch das Internet verläuft.

Das Endgerät 36 ist beispielsweise ein Endgerät, das gemäß Standard H.323 der ITU-T arbeitet. Dem Endgerät 36 ist eine Zugangseinheit 44 zugeordnet. Zwischen Endgerät 36 und Zugangseinheit 44 lässt sich ein Signalisierungsweg 46 aufbauen, beispielsweise über ein lokales Datenübertragungsnetz.

Die Netzübergangsfunktion 10 wird durch zwei räumlich voneinander getrennte Vermittlungsstellen 100 und 102 sowie durch die Netzübergangseinheit 28 erbracht. Mit anderen Worten enthält die Netzübergangsfunktion 10 eine Einheit, die gemäß einem Signalisierungsverfahren für ein durchschaltevermitteltes Netz und gemäß einem Signalisierungsverfahren für ein Datenpaketübertragungsnetz signalisiert, nämlich die Vermittlungsstelle 102 und den darin enthaltenen Diensterbringungsrechner 118. Weiterhin enthält die Netzübergangsfunktion 10 eine Einheit, die Nutzdaten sowohl durchschaltevermittelt als auch auf der Basis von Datenpaketen überträgt, nämlich die Netzübergangseinheit 28. Schließlich enthält die Netzübergangsfunktion 10 auch eine Einheit für die Steuerung der Einheit zur Übertragung der Nutzdaten, nämlich den in der Vermittlungsstelle 100 enthaltenen Diensterbringungsrechner 106.

Im Folgenden werden Signalisierungsnachrichten zum Aufbau eines Übertragungsweges zur Übertragung von Sprachdaten zwischen den Teilnehmern TlnA und dem Teilnehmer TlnB erläutert. Beim Aufbau der Gesprächsverbindung erzeugt die Vermittlungsstelle 20 zu einem Zeitpunkt t1 protokollgemäß eine Verbindungsaufbaunachricht 104, auch IAM-Nachricht (Initial Address Message) genannt. Diese Nachricht enthält beispielsweise unter anderem die vollständige Rufnummer oder einen Teil der Rufnummer des Teilnehmers TlnB und die Nummer eines für die Übertragung zu nutzenden Zeitschlitzes auf der Übertragungsstrecke 26. Die Vermittlungsstelle 20 arbeitet ISUPstandardgemäß. Aufgrund der Rufnummer des Teilnehmers TlnB werden die Übertragungsstrecke 26 genutzt und Signalisierungsnachrichten zur Vermittlungsstelle 100 gesendet. In der Vermittlungsstelle 100 wird an Hand des sogenannten CIC (Circuit Identifikation Code) erkannt, dass die Netzübergangseinheit 28 in die Verbindung einzubeziehen ist. Ein in der Vermittlungsstelle 100 enthaltener Diensterbringungsrechner 106 wird von einer Steuereinheit der Vermittlungsstelle 100 veranlasst, die zur Einbeziehung der Netzübergangseinheit 28 erforderlichen Schritte auszuführen.

Zu einem nach dem Zeitpunkt t1 liegenden Zeitpunkt t2 sendet der Diensterbringungsrechner 106 an die Netzübergangseinheit 28 über den Übertragungsweg 40 eine Verbindungsaufbaunachricht 108 gemäß Defacto-Standard RFC 2705 der IETF (Internet Engineering Task Force). Die Verbindungsaufbaunachricht 108 wird auch als CRCX-Nachricht (Create Connection) bezeichnet. In der Verbindungsnachricht 108 ist der Zeitschlitz angegeben, der für die Nutzdatenübertragung genutzt werden soll. Unter anderem ist als CODEC (Codierung/Decodierung) für eine aufzubauende RTP-Verbindung (Real Time Protokoll) das Verfahren gemäß Standard G.711 angegeben. Die Netzübergangseinheit 28 bearbeitet die Verbindungsaufbaunachricht 108 und erzeugt als Antwort zu einem Zeitpunkt t3 eine Antwortnachricht 110. Die Antwortnachricht 110 bestätigt zum einen den Empfang der Verbindungsaufbaunachricht 108 und enthält unter anderem eine Internetadresse und eine Portnummer, die für den Empfang von Nutzdaten auf dem zwischen der Netzübergangseinheit 28 und dem Endgerät 36 aufzubauenden Übertragungsweg 34 nutzbar ist. Als Übertragungsprotokoll auf dem Übertragungsweg 34 wird das Protokoll RTP (Real Time Protocol) gewählt, siehe Defacto-Standards RFC 1889 und RFC 1890 der IETF (Internet Engineering Task Force).

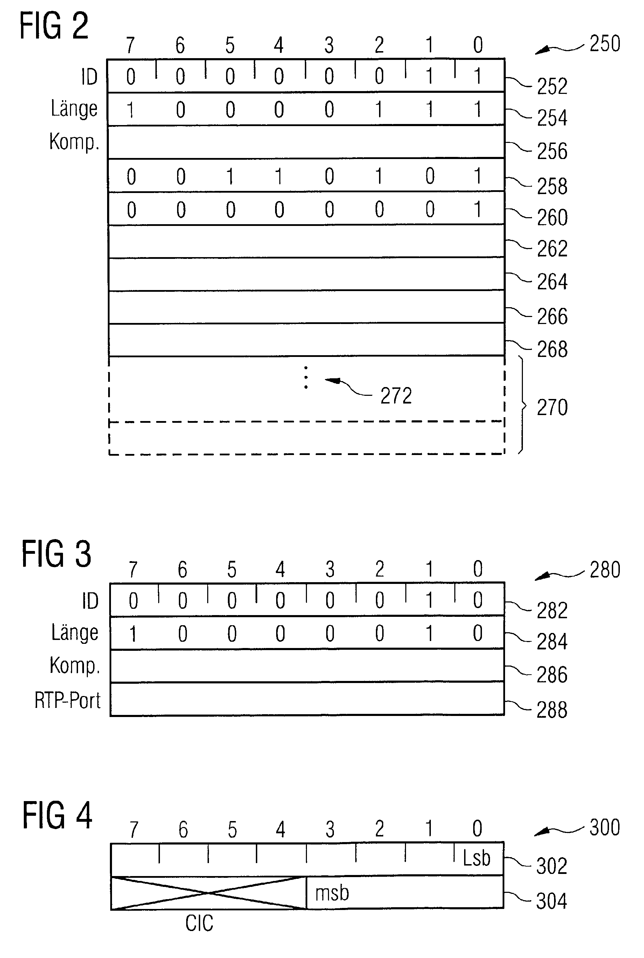

Der Diensterbringungsrechner 106 empfängt die Antwortnachricht 110 und leitet die empfangene Internetadresse sowie die Portnummer an die Steuereinheit der Vermittlungsstelle 100 weiter. Die Steuereinheit der Vermittlungsstelle 100 bearbeitet die Verbindungsaufbaunachricht 104 gemäß ISUP-Protokoll und erzeugt zu einem Zeitpunkt t4 eine Verbindungsaufbaunachricht 112. Die Verbindungsaufbaunachricht 112 wird gemäß ISUP-Protokoll auch als IAM-Nachricht (Initial Address Message) bezeichnet. In der Verbindungsaufbaunachricht 112 sind zwei unten an Hand der Figuren 2 und 3 näher erläuterte Informationselemente enthalten, in denen die Internetadresse und die Portnummer weitergeleitet werden, siehe Punkte 114. Diese Informationselemente sind nicht im ISUP-Standard festgelegt, werden jedoch unter Einhaltung dieses Standards über eine Signalisierungsverbindung 116 zur Vermittlungsstelle 102 übertragen. Die Informationselemente werden als Bestandteil von Signalisierungsnachrichten in einem Container APP (Application Transport Parameter) gemäß Standard Q.763 Add. 1 (06/00) und Q.765.5 übertragen.

Die Vermittlungsstelle 102 empfängt die Verbindungsaufbaunachricht 112 und bearbeitet auch die darin enthaltenen Informationselemente. Aufgrund des Inhalts dieser Informationselemente oder an Hand des Codes (CIC - Circuit Identification Code) zur Bezeichnung der Rufinstanz wird erkannt, dass keine übliche Telefonverbindung, sondern eine Telefonverbindung unter Verwendung des Datenpaketübertragungsnetzes 14 aufgebaut werden soll. Als zu nutzende Netzzugangseinheit auf der Seite des Teilnehmers TlnB wird die Netzzugangseinheit 44 ermittelt.

Ein in der Vermittlungsstelle 102 enthaltener Diensterbringungsrechner 118 wird durch die Steuereinheit der Vermittlungsstelle 102 veranlasst, eine Internetverbindung über den Übertragungsweg 42 zur Netzzugangseinheit 44 aufzubauen. Zu einem Zeitpunkt t5 sendet der Diensterbringungsrechner 118 eine ARQ-Nachricht 120 (Admission Request), siehe Standard H.323, insbesondere Abschnitt 8.1.2 "Both endpoints registered to the same Gatekeeper", einschließlich Figur 15 des Standards H.323. Die ARQ-Nachricht wird in der Netzzugangseinheit 44 standardgemäß bearbeitet. Zu einem Zeitpunkt t6 erzeugt die Netzzugangseinheit 44 standardgemäß eine ACF-Nachricht 122, die an den Diensterbringungsrechner 118 zu einem Zeitpunkt t6 gesendet wird. In der ACF-Nachricht 122 fügt die Netzzugangseinheit eine Adresse an, die für die folgende Signalisierung zu verwenden ist. Der Diensterbringungsrechner 118 sendet zu einem Zeitpunkt t7 eine standardgemäße Setup-Nachricht 124 an die in der Nachricht 122 enthaltene Adresse der Netzzugangseinheit 44a. Die Setup-Nachricht 124 enthält ein Informationselement, das auf einen Schnellstart hinweist, der auch Fast-Start genannt wird. In einem Informationselement der Setup-Nachricht 124 wird die Internetadresse und die Portnummer übermittelt, die zuvor in der Vermittlungsstelle 102 empfangen worden sind. Die genannten Informationselemente der Setup-Nachricht 124 sind im Standard H.225 der ITU-T, insbesondere im Abschnitt 7.3.10, näher erläutert.

Beim Bearbeiten der Setup-Nachricht 124 erzeugt die Netzzugangseinheit 44 protokollgemäß zu einem Zeitpunkt t8 eine Call-Proceeding-Nachricht 126 für den Diensterbringungsrechner 118. Außerdem werden die in der Setup-Nachricht 124 enthaltenen Informationselemente entnommen und zu einem Zeitpunkt t9 in einer protokollgemäßen Setup-Nachricht 128 an das Endgerät 36 weitergeleitet. In der Setup-Nachricht 128 ist ebenfalls ein Parameter für den Schnellstart angegeben. Beim Empfang der Setup-Nachricht 128 im Endgerät 36 wird protokollgemäß zu einem Zeitpunkt t10 eine Call-Proceeding-Nachricht 130 für die Netzzugangseinheit 44 erzeugt. Die Call-Proceeding-Nachricht 130 enthält ebenfalls Angaben für den Schnellstart, nämlich die für den aufzubauenden RTP-Übertragungsweg 34a auf der Seite des Endgeräts 36 zu nutzende Internetadresse sowie die zu nutzende Portadresse. Diese Angaben werden in der Netzzugangseinheit 44 zunächst gespeichert.

Zu einem Zeitpunkt t11 wird vom Endgerät 36 eine ARQ-Nachricht 132 gesendet, um die Zustimmung für die nachfolgenden Übertragungsvorgänge zu erhalten. Diese Zustimmung wird zu einem Zeitpunkt t12 mit Hilfe einer protokollgemäßen ACF-Nachricht von der Netzzugangseinheit 44 erteilt. Nach dem Empfang der ACF-Nachricht 134 sendet das Endgerät 36 zu einem Zeitpunkt t13 eine Alerting-Nachricht 136 an die Netzzugangseinheit 44 und erzeugt gleichzeitig einen Signalton, um den Teilnehmer TlnB auf den ankommenden Ruf aufmerksam zu machen.

Beim Empfang der Alerting-Nachricht 136 in der Netzzugangseinheit 44 wird eine Alerting-Nachricht 138 erzeugt. In die Alerting-Nachricht 138 werden die zum Zeitpunkt t10 übermittelte Adresse und die Portnummer eingebunden, siehe gestrichelte Linie 140. Die Alerting-Nachricht 138 wird zu einem Zeitpunkt t14 von der Netzzugangseinheit 44 zum Diensterbringungsrechner 118 gesendet.

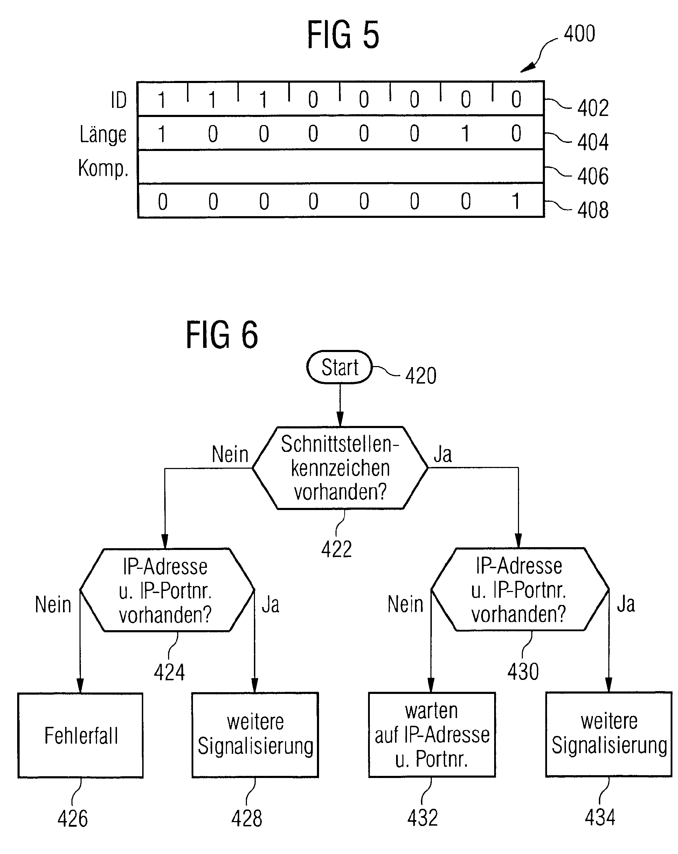

In der Vermittlungsstelle 102 wird beim Bearbeiten der Alerting-Nachricht 138 eine Tansportnachricht 142 erzeugt, die gemäß ISUP-Protokoll auch als APM-Nachricht (Application Transport Message) bezeichnet wird. Die Tansportnachricht 142 enthält Informationselemente mit der Internetadresse und der Portnummer des Endgerätes 36, siehe Punkte 144. Die Informationselemente haben die gleiche Struktur wie die unten an Hand der Figuren 2 und 3 erläuterten Informationselemente. Außerdem enthält die Transportnachricht 142 ein unten an Hand der Figur 5 erläutertes Informationselement 400 mit dem Wert Eins, der auf die Beteiligung eines am Internet 14 angeschlossenen Endgerätes 36 hinweist. Die Transportnachricht 142 wird zu einem Zeitpunkt t15 an die Vermittlungsstelle 100 übertragen.

Die Steuereinheit der Vermittlungsstelle 100 wertet das Informationselement 400 aus und extrahiert aus der Tansportnachricht 142 die Internetadresse und die Portnummer. Anschließend wartet die Vermittlungsstelle 100 auf das Eintreffen einer folgenden ACM-Nachricht 146. Schritte zum Auswerten des Datenfeldes 408 im Informationselement 400 werden unten an Hand der Figur 6 näher erläutert.

Aufgrund der zum Zeitpunkt t14 empfangenen Alerting-Nachricht 138 erzeugt die Vermittlungsstelle 102 zu einem Zeitpunkt t16 gemäß ISUP-Standard eine ACM-Nachricht 146 (Address Complete Message). Ein Parameter BCI (Backward Call Indicator) der ACM-Nachricht 146 hat einen Wert, der darauf hinweist, dass der Teilnehmer TlnB frei ist. Ein Parameter OBCI (Optional Backward Call Indicator) der ACM-Nachricht 146 erhält einen Wert, der darauf hinweist, dass noch kein Rufton erzeugt worden ist.

Die ACM-Nachricht 146 wird in der Vermittlungsstelle 100 protokollgemäß bearbeitet. Aufgrund des Wertes Eins im Datenfeld 408 des Informationselementes 400 und aufgrund der Werter der Parameter BCI und OBCI in der ACM-Nachricht 146 veranlasst die Steuereinheit den Diensterbringungsrechner 106, für die Anschaltung des Ruftons in der Netzübergangseinheit 28 zu sorgen. Das Anschalten eines Ruftons wird außerdem in der Vermittlungsstelle 100 für den aufzubauenden Übertragungsweg 34 vermerkt.

Zu einem Zeitpunkt t17 erzeugt der Diensterbringungsrechner 106 eine Änderungsnachricht 148 gemäß Defacto-Standard RFC 2705. Die Änderungsnachricht 148 wird auch als MDCX-Nachricht (Modify Connection) bezeichnet. Die Änderungsnachricht 148 enthält die in der Transportnachricht 142 übermittelte Internetadresse und Portnummer des Endgeräts 36 für den RTP-Übertragungsweg 34. Außerdem ist in der Änderungsnachricht 128 ein Datenfeld enthalten, mit dem die Anschaltung des Ruftons angefordert wird.

Bei der Bearbeitung der Änderungsnachricht 148 in der Netzübergangseinheit 28 wird der für den Verbindungsaufbau genutzte Zeitschlitz auf der Übertragungsstrecke 26 den übermittelten Zielparametern des Endgeräts 36 zugeordnet. Außerdem wird ein Tongenerator so angesteuert, dass zum Teilnehmer TlnA ein Rufton gesendet wird, der diesem anzeigt, dass das Endgerät 36 den Teilnehmer TlnB ruft. Eine von der Netzübergangseinheit 28 erzeugte Antwortnachricht auf die Änderungsnachricht 148 ist in Figur 1 nicht dargestellt.

Beim Bearbeiten der ACM-Nachricht 146 erzeugt die Vermittlungsstelle 100 außerdem eine ACM-Nachricht 150, die zu einem Zeitpunkt t19 an die Transitvermittlungsstelle 20 gesendet wird. Der Parameter BCI der ACM-Nachricht 150 hat einen Wert, der darauf hinweist, dass der Teilnehmer TlnB frei ist. Der Parameter OBCI der ACM-Nachricht 150 erhält einen Wert, der darauf hinweist, dass ein Rufton bereits erzeugt wird.

Meldet sich der Teilnehmer TlnB mit Hilfe des Endgerätes 36, so wird vom Endgerät 36 zu einem Zeitpunkt t20 eine Connect-Nachricht 152 erzeugt und an die Netzzugangseinheit 44 gesendet. Die Netzzugangseinheit 44 erzeugt ihrerseits aufgrund der Connect-Nachricht 152 eine Connect-Nachricht 154, die zu einem Zeitpunkt t21 an den Diensterbringungsrechner 118 gesendet wird. In der Vermittlungsstelle 102 wird nach dem Empfang der Connect-Nachricht 154 eine gemäß ISUP-Standard vorgesehene ANM-Nachricht 156 (Answer Message) erzeugt. Aufgrund dieser Nachricht beginnt die Gebührenpflicht.

In der Vermittlungsstelle 100 wird die ANM-Nachricht 156 bearbeitet. Die Vermittlungsstelle 100 prüft an Hand des oben erwähnten Vermerks, ob das Anschalten des Ruftones durch sie selbst veranlasst worden ist. Wenn sie das Anschalten veranlasst hat, so steuert sie den Diensterbringungsrechner 106 so an, dass der Diensterbringungsrechner 106 die Ausschaltung des Ruftons anfordert. Dazu sendet der Diensterbringungsrechner zu einem Zeitpunkt t23 eine Änderungsnachricht 158, die gemäß Defacto-Standard RFC 2307 auch als MDCX-Nachricht bezeichnet wird. In der Änderungsnachricht 158 ist ein Datenfeld enthalten, in dem die Deaktivierung des Ruftons angefordert wird. Beim Bearbeiten der Änderungsnachricht 158 in der Netzübergangseinheit 28 wird der Tongenerator ausgeschaltet.

Außerdem wird in der Vermittlungsstelle 100 beim Bearbeiten der ANM-Nachricht 156 die im ISUP-Standard vorgesehene ANM-Nachricht 160 an die nächste Vermittlungsstelle, d.h. an die Transitvermittlungsstelle 20, weitergeleitet. Die weitere Übertragung der Sprachdaten erfolgt wie im ISUP-Standard bzw. wie in der Standardgruppe zum Standard H.323 vorgesehen.

Bei einem anderen Ausführungsbeispiel wartet die Netzzugangseinheit 44 mit dem Aussenden der Call-Proceeding-Nachricht 126, bis die Call-Proceeding-Nachricht 130 vom Endgerät 36 eingetroffen ist. Die Internetadresse und die Portnummer werden dann gleich mit der Call-Proceeding-Nachricht 126 weitergeleitet. Dies erlaubt es, die APM-Nachricht 142 frühzeitig abzusenden. An Stelle der Änderungsnachricht 148 werden zwei getrennte Änderungsnachrichten erzeugt, von denen die zweite Änderungsnachricht zur Anschaltung des Ruftons dient.

In Figur 1 sind außerdem Funktionseinheiten zur Steuerung der Vermittlungsstelle 100 bzw. zur Steuerung der Vermittlungsstelle 102 dargestellt. Die Vermittlungsstelle 100 enthält eine Verteilfunktion 162, die gemäß Standard Q.704 der ITU-T arbeitet. Außerdem gibt es eine ISUP-Baugruppe 164, die die Informationselemente bearbeitet, die zwischen den Vermittlungsstellen 100 und 102 zum Übermitteln der Internetadressen und der Portnummern übertragen werden. Die A-seitige Rufsteuerung 52 ist mit der ISUP-Baugruppe 164 über ein internes Signalisierungsprotokoll 166 der Vermittlungsstelle 100 verbunden. Auch zwischen dem Diensterbringungsrechner 106 und der A-seitigen Rufsteuerung 52 bzw. zwischen der ISUP-Baugruppe 164 und dem Diensterbringungsrechner 106 werden Nachrichten gemäß dem internen Signalisierungsprotokoll 166 ausgetauscht.

Ebenso enthält die Vermittlungsstelle 102 eine Verteilfunktion 168, die im Standard Q.704 der ITU-T festgelegte Funktionen übernimmt. Als Partnerbaugruppe zur Baugruppe 164 ist in der Vermittlungsstelle 102 eine ISUP-Baugruppe 170 enthalten, die die Informationselemente bearbeitet bzw. erzeugt, die zum Signalisieren der Internetadresse und der Portnummer erforderlich sind. Zwischen der B-seitigen Rufsteuerung 50 und der ISUP-Baugruppe 170 wird ein internes Signalisierungsprotokoll zum Austausch von Signalisierungsnachrichten genutzt, das wie das interne Signalisierungsprotokoll 166 sehr stark an das ISUP-Protokoll angelehnt ist. Das interne Signalisierungsprotokoll 172 dient auch zum Austausch von Signalisierungsnachrichten zwischen der Baugruppe 170 und dem Diensterbringungsrechner 118 bzw. zwischen der B-seitigen Rufsteuerung 50 und dem Diensterbringungsrechner 118.

Figur 2 zeigt den Aufbau eines Informationselementes 150 zur Übertragung einer Internetadresse. Das Informationselement 250 enthält bei einem ersten Ausführungsbeispiel neun aufeinanderfolgende Datenfelder 252 bis 268, die jeweils eine Länge von acht Bit haben, d.h. von einem Byte. Bitpositionen 0 bis 7 liegen in dieser Reihenfolge von rechts nach links. Im Datenfeld 252 wird ein Kennzeichen zur Kennzeichnung des Informationselementes 250 übertragen. Das Kennzeichen hat den Wert 3, der im Standard Q.765.5 zum Hinweis auf sogenannte "Interworking Function Address" dient und der hier anzeigt, dass das Informationselement 250 zur Übertragung einer Internetadresse dient.

In einem Datenfeld 254 wird die Länge des Informationselementes 250 abzüglich der Datenfelder 252 und 254 angegeben. Im Ausführungsbeispiel ist im Datenfeld 254 der Wert Sieben binär gespeichert, siehe auch Standard Q.765.5, Abschnitt 11.1.1.

In dem Datenfeld 256 wird eine Kompatibilitätsinformation übertragen, deren Wert dem Empfänger anzeigt, was zu tun ist, wenn er das Informationselement 250 nicht vollständig bearbeiten kann, siehe auch Standard Q.765.5, Abschnitt 11.1.1.

Im Datenfeld 258 wird ein Berechtigungs- und Formatkennzeichen übertragen, das in hexadezimaler Schreibweise den Wert "35" hat. Dieser Wert wird gemäß Standard X.213 Anhang A der ITU als Hinweis auf das Internetprotokoll verwendet.

Im Datenfeld 260 ist ein Kennzeichen mit dem Wert Eins gespeichert, wenn eine Internetadresse gemäß Internetprotokoll Version 4 übertragen wird. In den sich anschließenden Datenfeldern 262 bis 268 werden dann die vier Byte der Internetadresse gemäß Version 4 des Internetprotokolls übertragen.

Soll dagegen mit Hilfe des Informationselementes 250 eine Internetadresse gemäß Internetprotokoll Version 6 übertragen werden, so gibt es eine Abweichung in der Längenangabe, siehe Datenfeld 254 und eine Abweichung im Datenfeld 260. Im Datenfeld 260 wird bei der Übertragung von Internetadressen gemäß Internetprotokoll Version 6 der Wert Null übertragen. In diesem Fall schließen sich an das Datenfeld 260 sechzehn Datenfelder 262 bis 270 an, in denen die sechzehn Byte der Internetadresse gemäß Internetprotokoll Version 6 gespeichert sind, siehe auch Punkte 272.

Figur 3 zeigt den Aufbau eines Informationselementes 280 zur Übertragung einer Portnummer. Das Informationselement 280 enthält vier Datenfelder 282 bis 288 von jeweils einem Byte Länge. Die Bedeutung der Datenfelder 282 bis 286 entspricht in dieser Reihenfolge der Bedeutung der Datenfelder 252 bis 256 des Informationselementes 250. Im Datenfeld 282 wird der Wert Zwei übertragen, um das Informationselement 280 als Informationselement zur Übertragung einer Portnummer zu kennzeichnen. Das im Datenfeld 282 übertragene Kennzeichnen wird abweichend von der hier erbrachten Funktion im Standard Q.765.5 als "backbone network connection identifier" bezeichnet. In einem Datenfeld 284 wird der Wert Zwei als Länge des Informationselementes 280 abzüglich der Datenfelder 282 und 284 übertragen. Im Datenfeld 286 wird eine Information zur Kompatibilität übertragen. Im Datenfeld 288 wird dann die Portnummer übertragen, z.B. die in der Netzzugangseinheit 28 bzw. im Endgerät 36 für die RTP-Verbindung zu nutzende Portnummer, siehe Figur 3.

Figur 4 zeigt den Aufbau eines Codeelementes 300, das zur Bezeichnung von Rufinstanzen zwischen den Vermittlungsstellen 100 und 102 eingesetzt wird, siehe Figur 3. Der Aufbau des Codeelementes 300 ist im Standard Q.763, Abschnitt 1.2 festgelegt. Das Codeelement 300 enthält zwei Datenfelder 302 und 304 mit jeweils einer Länge von einem Byte. Die Nummer der Instanz wird beginnend mit dem niederwertigsten Bit im Datenfeld 302, siehe Bitposition 0, bis zur Bitposition 7 des Datenfeldes 302 und dann weiter zwischen den Bitpositionen 0 bis 3 des Datenfeldes 304 übertragen. Die Bitpositionen 4 bis 7 des Datenfeldes 304 werden nicht zur Bezeichnung der Instanz genutzt. Das Codeelement 300 hat keine weiteren Datenfelder.

Figur 5 zeigt den Aufbau eines Informationselementes 400 zur Signalisierung der Beteiligung eines Endgerätes eines Datenpaketübertragungsnetzes, nämlich hier des Endgerätes 36. Das Informationselement 400 enthält vier Datenfelder 402 bis 408, die jeweils eine Länge von ein Byte haben. Die Bedeutung der Datenfelder 402, 404 und 406 entspricht in dieser Reihenfolge der Bedeutung der Datenfelder 252, 254 bzw. 256 des Informationselementes 250. Das Datenfeld 402 hat den binären Wert "11100000", und bezeichnet dadurch das Informationselement 400 als ein Informationselement zur Signalisierung der Beteiligung eines IP-Endgerätes. Das Datenfeld 404 hat den binären Wert "10000010" und legt die Anzahl der Datenfelder 406, 408 fest, die dem Datenfeld 404 folgen. Der Wert des Datenfeldes 406 ist für die Erläuterung der Erfindung ohne Bedeutung. Das Datenfeld 408 hat den Wert "00000001" und bezeichnet durch den Wert Eins, dass ein Endgerät eines Datenpaketübertragungsnetzes 14 beteiligt ist. Das Datenfeld 408 hat den Wert Null, wenn kein Endgerät eines Datenpaketübertragungsnetzes 14 beteiligt ist.

Figur 6 zeigt Verfahrensschritte zur Auswertung des Informationselementes 400 in der Vermittlungsstelle 100. Das Verfahren beginnt in einem Verfahrensschritt 420, nachdem das Informationselement 400 in der Vermittlungsstelle 100 empfangen wurde, d.h. nach dem Zeitpunkt t15. In einem folgenden Verfahrensschritt 422 wird geprüft, ob das Datenfeld 408 den Wert Eins enthält. Ist dies nicht der Fall, so folgt nach dem Verfahrensschritt 422 ein Verfahrensschritt 424, in welchem geprüft wird, ob mit Hilfe der APM-Nachricht 142 bereits die Internetadresse und die Portnummer des Endgerätes 36 übermittelt worden sind. Ist dies nicht der Fall, so wird in einem Verfahrensschritt 426 ein Fehlerfall ausgelöst. Wird dagegen im Verfahrensschritt 424 festgestellt, dass die Internetadresse und die Portnummer des Endgerätes 36 in der APM-Nachricht 142 enthalten sind, so folgt nach dem Verfahrensschritt 424 ein Verfahrensschritt 428, bei dem die weitere Signalisierung so wie oben an Hand der Figur 1 erläutert erfolgt.

Wird im Verfahrensschritt 422 dagegen festgestellt, dass das Datenfeld 408 den Wert Eins hat, so wird in einem unmittelbar folgenden Verfahrensschritt 430 geprüft, ob die APM-Nachricht 142 bereits die Internetadresse und die Portnummer des Endgerätes 36 enthält. Ist dies nicht der Fall, so wird kein Fehlerfall ausgelöst, sondern es wird auf das spätere Eintreffen der Internetadresse und der Portnummer des Endgerätes 36 in einem Verfahrensschritt 432 gewartet.

Wird dagegen im Verfahrensschritt 430 festgestellt, dass die Internetadresse und die Portnummer des Endgerätes 36 bereits in der Vermittlungsstelle 100 bekannt sind, siehe Erläuterungen zu Figur 1, so wird weiter entsprechend den an Hand der Figur 1 erläuterten Verfahrensschritten signalisiert, siehe Verfahrensschritt 434.

Bei einem weiteren Ausführungsbeispiel werden die Internetadresse und die Portnummer erst mit der Connect-Nachricht 152 zur Netzzugangseinheit 44 weitergeleitet. Die Adressangaben werden in die Connect-Nachricht 154 übernommen und zur Vermittlungsstelle 102 übermittelt. Die APM-Nachricht 142, die ACM-Nachricht 146 und die ANM-Nachricht 156 werden erst nach dem Eintreffen der Connect-Nachricht 154 gesendet. Die anderen Vorgänge bleiben unverändert.

Bei einem anderen Ausführungsbeispiel sind die Rufsteuerungen 50 und 52 in derselben Vermittlungsstelle untergebracht. Außerdem sind die beiden Diensterbringungsrechner 106 und 118 in derselben Vermittlungsstelle eingebaut. Es gibt nur ein internes Signalisierungsprotokoll 166 in der Vermittlungsstelle. An Stelle der Nachrichten 112, 142, 146 bzw. 156 werden mit Hilfe des internen Signalisierungsprotokolls 166 zwischen der Rufsteuerung 50 und der Rufsteuerung 52 diesen Nachrichten ähnliche interne Nachrichten ausgetauscht. Insbesondere wird auch das Informationselement 400 mit einer internen Nachricht übertragen. Im übrigen gelten die oben an Hand der Figur 1 erläuterten Vorgänge.

Bei einem anderen Ausführungsbeispiel ist auch die Netzübergangseinheit 28 in der Vermittlungsstelle 100 enthalten. In diesem Fall wird auch für die Übermittlung von Nachrichten zwischen dem Diensterbringungsrechner 106 und der Netzübergangseinheit 28 das interne Signalisierungsprotokoll 166 der Vermittlungsstelle 100 eingesetzt.

Bei einem nächsten Ausführungsbeispiel wird an Stelle des Protokolls der Protokollfamilie H.323 zwischen den auf der rechten Seite der Figur 1 dargestellten Einheiten 36, 44 und 118 das Protokoll SIP (Session Invocation Protocol) gemäß RFC 2543 oder ein anderes geeignetes Protokoll eingesetzt.

An Stelle des gemäß Internetprotokoll arbeitenden Datenpaketübertragungs-Netzes 14 wird bei einer anderen Ausgestaltung ein ATM-Netz eingesetzt. In diesem Fall wird zur Signalisierung zwischen den Vermittlungsstellen 100 und 102 das Protokoll BICC aus dem Standard Q.1901 der ITU-T eingesetzt. Aber auch bei einem IP-Netz lässt sich das Protokoll BICC zur Signalisierung nutzen, siehe Q.1902.x und Q.765.5 Amendment 1.

An Stelle des bei der Erläuterung der Figur 1 verwendeten Protokolls RFC 2705 (Request For Comment) "MGCP - Media Gateway Control Protocol" wird bei einem anderen Ausführungsbeispiel das Protokoll H.248 der ITU-T oder das Protokoll CBC (Call Bearer Control) der ITU-T eingesetzt, insbesondere Protokolle gemäß den Standards Q.1950, Q.1970 und Q.1990 der ITU-T.

Selbstverständlich können abweichend von den an Hand der Figuren 2 bis 5 erläuterten Werten in den Informationselementen auch andere Werte verwendet werden.

Bei einem weiteren Ausführungsbeispiel wird das Informationselement 400 erst mit der ACM-Nachricht 146 oder mit einer APM-Nachricht übertragen, die nach dem Zeitpunkt t16 aber noch vor dem Zeitpunkt t22 zwischen der Vermittlungsstelle 102 und der Vermittlungsstelle 100 übertragen wird. Die ACM-Nachricht 146 trifft jedoch in der Vermittlungsstelle 100 ein, bevor ein Zeitgeber abgelaufen ist, der eine Wartezeit für das Eintreffen der Verbindungsdaten festlegt. Der Zeitgeber wird beispielsweise gestartet, wenn festgestellt wird, dass die Transportnachricht 142 keine Verbindungsdaten enthält.

Bei einem nächsten Ausführungsbeispiel ist das H.323-Endgerät das rufende Endgerät und das Endgerät 16, d.h. das Telefon, das gerufene Endgerät. In diesem Fall wird mit einer von der Vermittlungsstelle 102 zur Vermittlungsstelle 100 übertragenen Verbindungsaufbaunachricht, d.h. mit einer IAM-Nachricht, bereits das Informationselement 400 übertragen, um die Beteiligung des Endgerätes 36 frühzeitig zu signalisieren. Demzufolge müssen die Verbindungsdaten auch noch nicht in dieser IAM-Nachricht übertragen werden.

## Patentansprüche

1. Signalisierungsverfahren für die Übertragung von Nutzdaten in verschiedenen Arten von Datenübertragungsnetzen (12, 14), bei dem Nutzdaten zwischen einem durchschaltevermittelten Datenübertragungsnetz (12) und einem Datenpaketübertragungsnetz (14) übertragen werden,
eine Signalisierungsnachricht (142, 40) übertagen wird, die eindeutig signalisiert, dass an der Datenübertragung ein Endgerät (36) eines Datenpaketübertragungsnetzes (14) oder eine Einheit beteiligt ist, die Daten wie ein Endgerät eines Datenpaketübertragungsnetzes (14) überträgt oder eine Datenübertragung mit einem Endgerät eines Datenpaketübertragungsnetzes veranlasst,
und bei dem abhängig vom Inhalt oder abhängig vom Auftreten der Signalisierungsnachricht (142, 400) die Übertragung von Daten zwischen dem durchschaltevermittelten Datenübertragungsnetz (12) und dem Datenpaketübertragungsnetz (14) von anderen Datenübertragungen unterschieden wird.

2. Verfahren nach Anspruch 1, **dadurch gekennzeichnet, dass** die Signalisierungsnachricht (142) einen Standard für die Signalisierung in einem durchschaltevermittelten Datenübertragungsnetz erfüllt.

3. Verfahren nach Anspruch 1 oder 2, **dadurch gekennzeichnet, dass** die Signalisierungsnachricht (142) ein Informationselement (400) enthält, dessen Wert (408) zur Signalisierung dient.

4. Verfahren nach Anspruch 3, **dadurch gekennzeichnet, dass** die Signalisierungsnachricht (142) eine standardgemäße Signalisierungsnachricht (142) ist, wie sie auch bei der Signalisierung für eine Datenübertragung eingesetzt wird, bei der die Daten ausschließlich in einem durchschaltevermittelten Datenübertragungsnetz (12) übertragen werden, und/oder dass das Informationselement (400) mittels eines standardgemäßen Transportmechanismus übermittelt wird, wie er auch bei der Signalisierung für eine Datenübertragung eingesetzt wird, bei der die Daten ausschließlich in einem durchschaltevermittelten Datenübertragungsnetz (12) übertragen werden.

5. Verfahren nach Anspruch 4, **dadurch gekennzeichnet, dass** der ISUP-Standard oder ein auf dem ISUP-Standard aufbauender Standard erfüllt wird.

6. Verfahren nach Anspruch 3, **dadurch gekennzeichnet, dass** die Signalisierungsnachricht (142) eine standardgemäße Signalisierungsnachricht (142) ist, wie sie bei der Signalisierung für eine Datenübertragung eingesetzt wird, bei der die Daten von einem durchschaltevermittelten Datenübertragungsnetz (12) über ein Datenpaketübertragungsnetz (14) zu einem durchschaltevermittelten Datenübertragungsnetz übertragen werden,
und/oder dass das Informationselement (400) mittels eines standardgemäßen Transportmechanismus übermittelt wird, wie er bei der Signalisierung für eine Datenübertragung eingesetzt wird, bei der die Daten von einem durchschaltevermittelten Datenübertragungsnetz (12) über ein Datenpaketübertragungsnetz (14) zu einem durchschaltevermittelten Datenübertragungsnetz übertragen werden.

7. Verfahren nach Anspruch 6, **dadurch gekennzeichnet, dass** der BICC-Standard oder ein auf dem BICC-Standard aufbauender Standard erfüllt wird.

8. Verfahren nach einem der Ansprüche 3 bis 7, **dadurch gekennzeichnet, dass** das Informationselement gemäß Standard Q.765.5 aufgebaut ist,
und/oder dass das Informationselement (400) in der folgenden Reihenfolge enthält:
ein Kennzeichen (403) zur Bezeichnung des Informationselementes (400),
eine Angabe (404) zur Länge des Informationselementes (400), eine Kompatibilitätsinformation (406),
und eine Angabe (408) für den Wert des Informationselementes (400).

9. Verfahren nach einem der Ansprüche 3 bis 8, **dadurch gekennzeichnet, dass** das Informationselement (400) mit Hilfe einer IAM-Nachricht (112) gemäß ISUP-Standard oder gemäß BICC-Standard oder gemäß einem auf einem dieser Standards aufbauenden Standard übermittelt wird.
oder dass das Informationselement (400) mit Hilfe einer APM-Nachricht (142) und/oder vor der Übertragung einer ANM-Nachricht (146) gemäß ISUP-Standard oder gemäß BICC-Standard oder gemäß einem auf einem dieser Standards aufbauenden Standard übermittelt wird.

10. Verfahren nach einem der vorhergehenden Ansprüche, **dadurch gekennzeichnet, dass** abhängig von der Signalisierungsnachricht (142) oder sowohl abhängig von der Signalisierungsnachricht (142) als auch abhängig vom Inhalt einer weiteren Signalisierungsnachricht (146) ein Rufton erzeugt wird.

11. Verfahren nach einem der vorhergehenden Ansprüche, **dadurch gekennzeichnet, dass** abhängig von der Signalisierungsnachricht (142) auf das Eintreffen von Daten gewartet wird, die für den Verbindungsaufbau auf einer höheren Protokollebene des Datenpaketübertragungsnetzes (14) (Schritt 432) erforderlich sind.

12. Verfahren nach einem der vorhergehenden Ansprüche, **dadurch gekennzeichnet, dass** das durchschaltevermittelte Datenübertragungsnetz (12) ein Telefonnetz ist, und/oder dass das Datenpaketübertragungsnetz (14) ein gemäß Internetprotokoll arbeitendes Netz oder ein gemäß ATM-Protokoll arbeitendes Netz ist.

13. Signalisierungseinheit (10), insbesondere Netzübergangseinheit,
mit einer Steuereinheit,
**dadurch gekennzeichnet, dass** die Steuereinheit so aufgebaut ist, dass bei ihrem Betrieb ein Verfahren nach einem der vorhergehenden Ansprüche ausgeführt wird.

14. Programm, **dadurch gekennzeichnet, dass** bei der Ausführung seiner Befehle durch einen Prozessor ein Verfahren nach einem der Ansprüche 1 bis 12 ausgeführt wird.
